# EUROPÄISCHE PATENTSCHRIFT

(11) **EP 2 295 926 B1**
(45) Veröffentlichungstag und Bekanntmachung des Hinweises auf die Patenterteilung: **23.07.2014**
(21) Anmeldenummer: 10175019.8
(22) Anmeldetag: 02.09.2010
(51) Int. Cl.: F41G 1/38, F41G 3/00, G01C 1/04, G02B 27/14

(54) **Zielfernrohr**
Telescopic sight
Lunette de visée

(30) Priorität: 03.09.2009 DE 102009039851
(43) Veröffentlichungstag der Anmeldung: 16.03.2011
(73) Patentinhaber: Carl Zeiss Sports Optics GmbH, 35576 Wetzlar (DE)
(72) Erfinder: Schlierbach, Armin, 35638 Leun (DE)
(74) Vertreter: Patentanwälte Freischem

(56) Entgegenhaltungen:
- EP-A1- 2 078 975
- EP-A2- 0 709 705
- WO-A1-00/77554
- WO-A2-2009/094687
- DE-C1- 19 933 172
- US-A- 5 126 549
- BRAUCKHOFF: "Arbeitsheft für das Fach Gewehr G 36", 20060101, 1. Januar 2006 (2006-01-01), Seiten 1-21, XP007915923,

## Beschreibung

Die Erfindung betrifft ein Zielfernrohr mit einem in Betriebsstellung einem zu beobachtenden Zielobjekt zuzuwendenden Objektiv, einem einem Beobachter zuzuwendenden Okular, einem visuellen Beobachtungsstrahlengang, einem Innenrohr mit einem Umkehrsystem, Mitteln zum Verstellen der Richtung der Visierlinie des Zielfernrohrs, einem Entfernungsmesser und mit einem Fernrohrgehäuse.

Ein derartiges Zielfernrohr ist beispielsweise aus der EP 0 709 705 B1 bekannt. Dort ist ein Zielfernrohr für Schusswaffen angegeben mit einer Zielmarke, einer Einrichtung zur Justierung der Zielmarke auf den Treffpunkt und einem Laserentfernungsmesser für das Ziel mit einem Lasersender und einem Laserempfänger, wobei das Zielfernrohrobjektiv durch Einbringen des Strahlengangs des Lasersenders und des Strahlengangs des Laserempfängers in den visuellen Zielfernrohrstrahlengang zugleich das Objektiv für den Lasersender und den Laserempfänger bildet, und wobei die Einrichtung zur Justierung der Zielmarke auf den Treffpunkt ein gegenüber der Zielmarke bewegbares optisches Teil zwischen der Zielmarke und der Lichteintrittsseite des Zielfernrohrs aufweist.

Ein Zielfernrohr gemäß der WO 2006/084689 A2 weist eine optische Achse und eine Visierlinie auf. Erste Mittel dienen zum Verstellen der Richtung der Visierlinie. Mit dem Zielfernrohr ist ein Entfernungsmesser baulich verbunden, der eine Lichtquelle zum Senden eines Mess-Sendestrahls aufweist. Der Mess-Sendestrahl verläuft außerhalb des Zielfernrohrs. Seine Richtung stimmt mit der Richtung der Visierlinie im Wesentlichen überein. Zweite Mittel dienen zum selbsttätigen Nachführen der Richtung des Mess-Sendestrahls bei einem Verstellen der Richtung der Visierlinie. Die Lichtquelle ist schwenkbar am Zielfernrohr angeordnet. Die zweiten Mittel sind als zwischen dem Zielfernrohr und der Lichtquelle wirkendes Getriebe ausgebildet. Der externe Entfernungsmesser muss somit über entsprechende zusätzliche Mittel der Elevation bzw. der Visierlinie nachgeführt werden.

Des Weiteren wird zum Stand der Technik auf die DE 44 38 955 C2, die WO 00/77554 A1, die US 2005/0219690 A1, die DE 199 33 172 C1 und die WO 2008/099939 A1 verwiesen.

Der vorliegenden Erfindung liegt die Aufgabe zugrunde, ein Zielfernrohr der eingangs erwähnten Art möglichst kompakt und mit einer hohen Justagestabilität zwischen Entfernungsmesserstrahlengang und visuellem Beobachtungsstrahlengang auszuführen.

Diese Aufgabe wird erfindungsgemäß durch ein Zielfernrohr mit einem in Betriebsstellung einem zu beobachtenden Zielobjekt zuzuwendenen Objektiv, einem einem Beobachter zuzuwendenden Okular, einem Beobachtungsstrahlengang, einem Innenrohr mit einem Umkehrsystem, Mitteln zum Verstellen der Richtung der Visierlinie des Zielfernrohrs, einem Entfernungsmesser und mit einem Fernrohrgehäuse gelöst, in welchem der Entfernungsmesser, welcher eine Sendeeinrichtung zum Aussenden eines Messstrahls und eine Empfangseinrichtung zum Empfangen des reflektierten Messstrahls aufweist, und ein im Bereich des Beobachtungsstrahlengangs angeordnetes Strahlteilerelement, welches den ausgesendeten Messstrahl in den zu dem Objektiv verlaufenden Teil des Beobachtungsstrahlengangs einkoppelt und/oder den empfangenen, reflektierten Messstrahl aus dem zu dem Objektiv verlaufenden Teil des Beobachtungsstrahlengangs auskoppelt, integriert sind, wobei die Sendeeinrichtung des Entfernungsmessers, die Empfangseinrichtung des Entfernungsmessers und das Strahlteilerelement derart bewegungsfest zueinander und zu dem Innenrohr des Zielfernrohrs fixiert sind, dass sie durch die Mittel des Zielfernrohrs zum Verstellen der Richtung der Visierlinie mitbewegbar sind.

Durch die erfindungsgemäßen Maßnahmen werden der Senderstrahlengang und der Empfängerstrahlengang des Entfernungsmessers in vorteilhafter Weise über ein und dasselbe Prismensystem bzw. Strahlteilerelement ein- und ausgekoppelt. Dies ermöglicht zum Einen eine kompakte Bauform des Zielfernrohrs, da der Entfernungsmesserstrahlengang im optischen Beobachtungsstrahlengang integriert ist und zum Anderen eine hohe Justagestabilität, da ein separates mechanisches Nachführen insbesondere der Sendeeinrichtung des Entfernungsmessers nicht mehr notwendig ist. Der Entfernungsmesser kann sich durch den internen Aufbau sozusagen mit dem Strahlteilerelement und der Elevation mitbewegen. Somit ergibt sich eine mechanisch stabile und starre Kopplung in einer gemeinsamen Baueinheit. Wird nun das Innenrohr des Zielfernrohrs über die Elevationseinstellung, d. h. über die Mittel des Zielfernrohrs zum Verstellen der Richtung der Visierlinie, verstellt, dann wird diese Baueinheit gemeinsam mit dem Umkehrsystem bzw. Umkehrzoomsystem und der Zielmarke (Reticle) um einen Drehpunkt des Innenrohrs bewegt. Dadurch wird die Strahlung, insbesondere das Laserlicht des Entfernungsmessers stets in dieselbe Richtung wie das Visierpunktlicht geleitet. Der Strahlengang des Senders und des Empfängers koppelt sozusagen genau auf der Achse des Umkehrzoomsystems. Der Laserstrahl wird dadurch genau auf die Visierlinie ausgerichtet. Es wird ein kompaktes Zielfernrohr geschaffen, bei welchem kein zusätzlicher externer Anbau für den Entfernungsmesser notwendig ist.

Erfindungsgemäß kann ferner vorgesehen sein, dass das Strahlteilerelement monolithisch ohne Bildumkehr ausgeführt ist und wenigstens ein erstes objektivseitiges keilförmiges Teilprisma und wenigstens ein zweites okularseitiges keilförmiges Teilprisma aufweist, welche jeweils Grenzflächen aufweisen, zwischen denen wenigstens eine erste Grenzebene vorgesehen ist.

Die spitzen Winkel des ersten keilförmigen Teilprismas und des zweiten keilförmigen Teilprismas können in einem Bereich von 17,5° bis 35°, insbesondere in einem Bereich von 22,5° bis 30°, vorzugsweise bei etwa 25°, liegen.

Die Grundflächen des ersten keilförmigen Teilprismas und des zweiten keilförmigen Teilprismas können jeweils einen rechten Winkel aufweisen, welcher den jeweiligen Grenzflächen des ersten keilförmigen Teilprismas und des zweiten keilförmigen Teilprismas gegenüberliegt.

In einer konstruktiven Ausgestaltung der Erfindung kann vorgesehen sein, dass das erste keilförmige Teilprisma und das zweite keilförmige Teilprisma an ihren Grenzflächen in der ersten Grenzebene aneinander liegen.

Vorteilhaft ist es, wenn der von der Sendeeinrichtung ausgehende Messstrahl auf eine erste Oberfläche des ersten keilförmigen Teilprismas trifft, das erste keilförmige Teilprisma unter einer oder mehreren Reflexionen an dessen Innenflächen durchläuft, an der ersten Grenzebene in den zu dem Objektiv verlaufenden Teil des Beobachtungsstrahlengangs abgelenkt und auf ein Zielobjekt geleitet wird. Dadurch können in vorteilhafter Weise der Lasersendestrahlengang und der Beobachtungsstrahlengang miteinander kombiniert werden. Dazu kann ein zusätzliches optisches Element, insbesondere ein Prisma, an dem Strahlteilerelement oder dem ersten keilförmigen Teilprisma angeordnet sein, durch welches der von der Sendeeinrichtung ausgehende Messstrahl auf die erste Oberfläche des ersten keilförmigen Teilprismas geleitet wird. Die erste Grenzebene kann in einem an das zusätzliche optische Element angrenzenden Bereich einen Reflexionsgrad von größer oder gleich 50 %, vorzugsweise etwa 70 % und einen Transmissionsgrad von kleiner oder gleich 50 %, vorzugsweise etwa 30 % für den Wellenlängenbereich des Messstrahls aufweisen. Die optischen Eigenschaften könnten auch komplementär gewählt werden, um denselben Effekt zu erzeugen. Somit wäre für den an das zusätzliche optische Element angrenzenden Bereich der ersten Grenzebene auch ein Transmissionsgrad von größer oder gleich 50 %, vorzugsweise etwa 70 % und ein Reflexionsgrad von kleiner oder gleich 50 %, vorzugsweise etwa 30 % für den Wellenlängenbereich des Messstrahls denkbar.

In einer weiteren erfindungsgemäßen Ausgestaltung kann vorgesehen sein, dass das Strahlteilerelement ein zusätzliches drittes Teilprisma mit einer objektivseitigen Grenzfläche und einer okularseitigen Grenzfläche zwischen dem ersten keilförmigen Teilprisma und dem zweiten keilförmigen Teilprisma aufweist. Durch die Anordnung eines weiteren Teilprismas in dem Strahlteilerelement können die Längenverhältnisse optimiert werden.

Die Grenzfläche des ersten keilförmigen Teilprismas und die objektivseitige Grenzfläche des dritten Teilprismas können in einer zweiten Grenzebene aneinander liegen. Die Grenzfläche des zweiten keilförmigen Teilprismas und die okularseitige Grenzfläche des dritten Teilprismas können in der ersten Grenzebene aneinander liegen.

Vorteilhaft ist es, wenn ein von der Sendeeinrichtung ausgehender Messstrahl auf eine Oberfläche des dritten Teilprismas trifft, das dritte Teilprisma wenigstens teilweise durchläuft, an der ersten Grenzebene in den zu dem Objektiv verlaufenden Teil des Beobachtungsstrahlengangs abgelenkt und auf das Zielobjekt geleitet wird. Dementsprechend kann der Lasersendestrahlengang auch bei Verwendung eines dritten Teilprismas mit dem visuellen Beobachtungsstrahlengang kombiniert werden.

Vorteilhaft ist es, wenn ein entlang des Beobachtungsstrahlengangs auf das erste keilförmige Teilprisma auftreffender empfangener reflektierter Messstrahl an der ersten Grenzebene oder an der zweiten Grenzebene aus dem Beobachtungsstrahlengang abgelenkt wird, das erste keilförmige Teilprisma unter mehreren Reflexionen an dessen Innenflächen durchläuft, an einer Oberfläche des ersten keilförmigen Teilprismas austritt und auf die Empfangseinrichtung geleitet wird. Dadurch kann in vorteilhafter Weise auch der Empfängerstrahlengang des Entfernungsmessers mit dem visuellen Beobachtungsstrahlengang kombiniert werden, wodurch eine sehr kompakte Bauweise des erfindungsgemäßen Zielfernrohrs erreicht werden kann.

Das Zielfernrohr kann zusätzlich eine Anzeigeeinrichtung, insbesondere ein Display oder eine Zielmarke, zur Anzeige eines Bildes in dem Beobachtungsstrahlengang aufweisen.

Erfindungsgemäß kann ferner vorgesehen sein, dass das Bild der Anzeigeeinrichtung mittels des Strahlteilerelements in den zu dem Okular verlaufenden Teil des Beobachtungsstrahlengangs einkoppelbar ist.

Zwischen dem Strahlteilerelement und der Anzeigeeinrichtung kann ein optisches Element bzw. eine optische Baugruppe vorgesehen sein, um ein Abbilden der Anzeigeeinrichtung in die okularseitige oder objektivseitige Zwischenbildebene des Zielfernrohrs zu ermöglichen.

Vorteilhaft ist es, wenn die Anzeigeeinrichtung ebenfalls derart bewegungsfest zu der Sendeeinrichtung des Entfernungsmessers, der Empfangseinrichtung des Entfernungsmessers, dem Strahlteilerelement und zu dem Innenrohr des Zielfernrohrs fixiert ist, dass die Anzeigeeinrichtung durch die Mittel des Zielfernrohrs zum Verstellen der Richtung der Visierlinie mitbewegbar ist.

Es ist bekannt, Zielfernrohre neben Laserentfernungsmessern mit weiteren Zusatzfunktionen wie Neigungsmessern, Ballistikrechnern, Thermometern, Luftdruckmessern, Absehenbeleuchtungen oder dergleichen auszustatten. Diese Zusatzfunktionen bzw. Messergebnisse werden so angezeigt, dass sie im Okular sichtbar sind. Hierzu ist es bekannt, ein Display direkt in einer Bildebene des visuellen Beobachtungsstrahlengangs des Zielfernrohrs vorzusehen, was den Nachteil hat, dass nicht mehr das gesamte Sehfeld für den Beobachter zur Verfügung steht. Bei dem erfindungsgemäßen Zielfernrohr ist es in vorteilhafter Weise jedoch möglich, zusätzliche Daten, wie etwa Entfernung, Temperatur oder dergleichen oder beispielsweise eine Zielmarke über das Strahlteilerelement einzuspiegeln und dem visuellen Bild des Beobachtungsstrahlengangs zu überlagern.

Vorteilhaft ist es, wenn ein von der Anzeigeeinrichtung ausgehendes Anzeigelicht auf eine Oberfläche des zweiten keilförmigen Teilprismas trifft, das zweite keilförmige Teilprisma, insbesondere unter mehreren Reflexionen an dessen Innenflächen, durchläuft und an der ersten Grenzebene in den zu dem Okular verlaufenden Teil des Beobachtungsstrahlengangs abgelenkt wird. Somit wird auch die Einkopplung eines Displaystrahlengangs oder dergleichen ermöglicht.

Die erste Grenzebene kann wenigstens in einem Teilbereich einen Transmissionsgrad von größer oder gleich 95 % für das visuelle Beobachtungslicht und einen Reflexionsgrad von größer oder gleich 99 % für den Wellenlängenbereich des Messstrahls aufweisen. In dem Wellenlängenbereich des Anzeigelichts beträgt der Transmissionsgrad somit nur etwa 65 %. Die erste Grenzebene kann wenigstens in einem Teilbereich einen Reflexionsgrad von größer oder gleich 30 % für die Wellenlänge des Anzeigelichts aufweisen, wobei in dem Wellenlängenbereich des Anzeigelichts der Transmissionsgrad nur etwa 65 % betragen kann. Darüber hinaus kann die zweite Grenzebene wenigstens in einem Teilbereich einen Transmissionsgrad von größer oder gleich 95 % für das visuelle Beobachtungslicht und einen Reflexionsgrad von größer oder gleich 50 % für den Wellenlängenbereich des Messstrahls aufweisen.

Der Entfernungsmesser kann als Laserentfernungsmesser bzw. die Sendeeinrichtung als Laserdiode insbesondere in einem Wellenlängenbereich von 850 bis 950 nm, vorzugsweise 905 nm oder in einem Wellenlängenbereich von 1500 bis 1600 nm, vorzugsweise 1540 nm ausgebildet sein. Durch die Wahl eines Wellenlängenbereichs von 1500 bis 1600 nm kann die Augensicherheit erhöht werden. Darüber hinaus ist eine derartige Wellenlänge, insbesondere von Nachtsichtgeräten oder dergleichen, nur schwer oder nicht detektierbar.

In vorteilhafter Weise kann an dem ersten keilförmigen Teilprisma ein Spiegelelement, insbesondere ein Silberspiegel, im Bereich der Sendeeinrichtung vorgesehen sein, wodurch in diesem Bereich der empfangene Messstrahl, trotz eines eventuell vorhandenen relativ steilen Einfallswinkels auf die Innenfläche des ersten keilförmigen Teilprismas sehr hoch beispielweise zu über 95 % reflektiert wird.

Das erste keilförmige Teilprisma und das zweite keilförmige Teilprisma des Strahlteilerelements können derart zueinander verdreht angeordnet sein, dass das Strahlteilerelement auch bei Vorhandensein des dritten Teilprismas wenigstens in einem Teilbereich in Durchtrittsrichtung des Beobachtungsstrahlengangs als planparallele Platte ausgebildet ist.

Zur Teilung von ausgesendetem und empfangenem, reflektierten Messstrahl kann in Strahlrichtung zwischen dem Strahlteilerelement einerseits und der Sendeeinrichtung des Entfernungsmessers und der Empfangseinrichtung des Entfernungsmessers andererseits ein weiteres Teilerelement angeordnet sein.

Das weitere Teilerelement kann ebenfalls derart bewegungsfest zu der Sendeeinrichtung des Entfernungsmessers, der Empfangseinrichtung des Entfernungsmessers, dem Strahlteilerelement und zu dem Innenrohr des Zielfernrohrs fixiert sein, dass das weitere Teilerelement durch die Mittel des Zielfernrohrs zum Verstellen der Richtung der Visierlinie mitbewegbar ist.

Das weitere Teilerelement kann einen Reflexionsgrad von größer oder gleich 50 %, vorzugsweise etwa 70 % und einen Transmissionsgrad von kleiner oder gleich 50 %, vorzugsweise etwa 30 % für den Wellenlängenbereich des Messstrahls aufweisen. Die optischen Eigenschaften könnten auch komplementär gewählt werden, um denselben Effekt zu erzeugen. Somit wäre für das weitere Teilerelement auch ein Transmissionsgrad von größer oder gleich 50 %, vorzugsweise etwa 70 % und ein Reflexionsgrad von kleiner oder gleich 50 %, vorzugsweise etwa 30 % für den Wellenlängenbereich des Messstrahls denkbar.

Das Strahlteilerelement des erfindungsgemäßen Zielfernrohrs kann auch zum Ein- und Auskoppeln eines Entfernungsmesserstrahlengangs bzw. einer Zielmarke oder sonstiger Daten in einem Doppelfernrohr, einem Spektiv oder einem Periskop eingesetzt werden.

Vorteilhafte Ausgestaltungen der Erfindung ergeben sich aus den Unteransprüchen. Nachfolgend sind anhand der Zeichnungen prinzipmäßig Ausführungsbeispiele der Erfindung beschrieben.

Es zeigen:
- Figur 1: eine vereinfachte Schnittdarstellung eines erfin- dungsgemäßen Zielfernrohrs;
- Figur 2: eine schematische Seitenansicht eines Strahlteiler- elements in einer zweiten Ausführungsform für das er- findungsgemäße Zielfernrohr;
- Figur 3: eine schematische Seitenansicht eines Strahlteiler- elements in einer dritten Ausführungsform für das er- findungsgemäße Zielfernrohr;
- Figur 4: eine schematische Seitenansicht eines Strahlteiler- elements in einer vierten Ausführungsform für das er- findungsgemäße Zielfernrohr;
- Figur 5: eine schematische Seitenansicht eines Strahlteiler- elements in einer ersten Ausführungsform für das er- findungsgemäße Zielfernrohr;
- Figur 6: eine perspektivische Darstellung des Strahlteilerele- ments gemäß der ersten Ausführungsform aus Figur 5;
- Figur 7: eine perspektivische Darstellung eines ersten objek- tivseitigen keilförmigen Teilprismas des Strahltei- lerelements gemäß der ersten Ausführungsform;
- Figur 8: eine perspektivische Darstellung des zweiten okular- seitigen keilförmigen Teilprismas des Strahlteiler- elements gemäß der ersten Ausführungsform;
- Figur 9: eine perspektivische Darstellung eines zusätzlichen Prismas des Strahlteilerelements gemäß der ersten Ausführungsform; und
- Figur 10: eine schematische Seitenansicht eines Strahlteiler- elements in einer fünften Ausführungsform mit einem weiteren Teilerelement für das erfindungsgemäße Ziel- fernrohr.

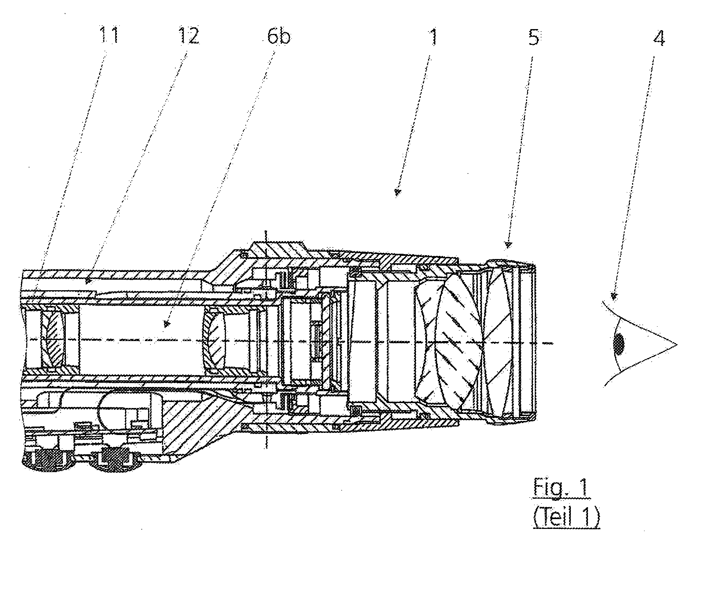

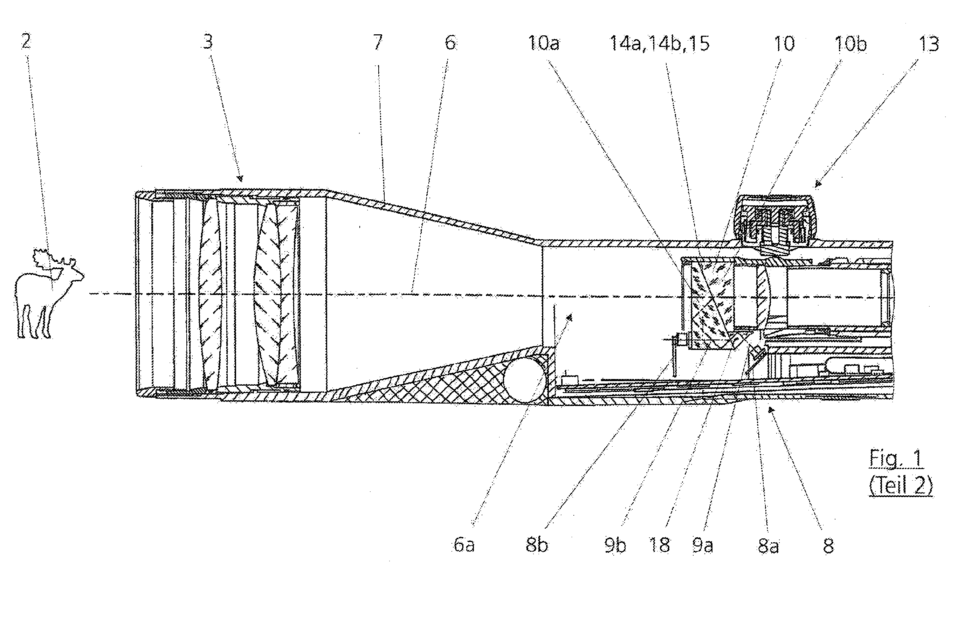

In Figur 1 ist ein erfindungsgemäßes Zielfernrohr 1 dargestellt. Das Zielfernrohr 1 ist mit einem in Betriebsstellung einem zu beobachtenden Zielobjekt 2 zuzuwendenden Objektiv 3 und einem einem Beobachter 4 zuzuwendenden Okular 5 versehen. Das Zielfernrohr 1 weist eine Visierlinie bzw. einen visuellen Beobachtungsstrahlengang 6 auf, welcher in einer Grundeinstellung des Zielfernrohrs 1 mit der optischen Achse des Zielfernrohrs 1 zusammenfällt. Das Zielfernrohr 1 weist ein Fernrohrgehäuse 7 auf, in welchem ein Entfernungsmesser 8, welcher eine Sendeeinrichtung 8a zum Aussenden eines Messstrahls 9a und eine Empfangseinrichtung 8b zum Empfangen des, insbesondere von dem Zielobjekt 2, reflektierten Messstrahls 9b aufweist, und ein im Bereich des Beobachtungsstrahlengangs 6 angeordnetes Strahlteilerelement 10 in einer ersten Ausführungsform, welches den ausgesendeten Messstrahl 9a in den zu dem Objektiv 3 verlaufenden Teil 6a des Beobachtungsstrahlengangs 6 einkoppelt und/oder den empfangenen, reflektierten Messstrahl 9b aus dem zu dem Objektiv 3 verlaufenden Teil 6a des Beobachtungsstrahlengangs 6 auskoppelt, integriert ist. In dem Zielfernrohr 1 befindet sich auf der von dem Objektiv 3 abgewandten Seite ein relativ zur optischen Achse, insbesondere um einen Drehpunkt schwenkbar gelagertes Innenrohr 11, in bzw. an welchem ein Umkehrzoomsystem bzw. Umkehrsystem 12 und das Strahlteilerelement 10 angeordnet sind. Darüber hinaus sind Mittel 13 zum Verstellen des Innenrohrs 11 und damit der Visierlinie an dem Zielfernrohr 1 vorgesehen. Die Mittel 13 weisen zwei um 90° am Umfang des Zielfernrohrs 1 versetzte Türme auf, von denen in Figur 1 nur einer gezeigt ist. Die Mittel 13 zum Verstellen der Richtung der Visierlinie sind von der Bauart wie sie in der eingangs erwähnten WO 2006/084689 A2 beschrieben sind, auf deren Offenbarung der Einfachheit halber verwiesen werden darf.

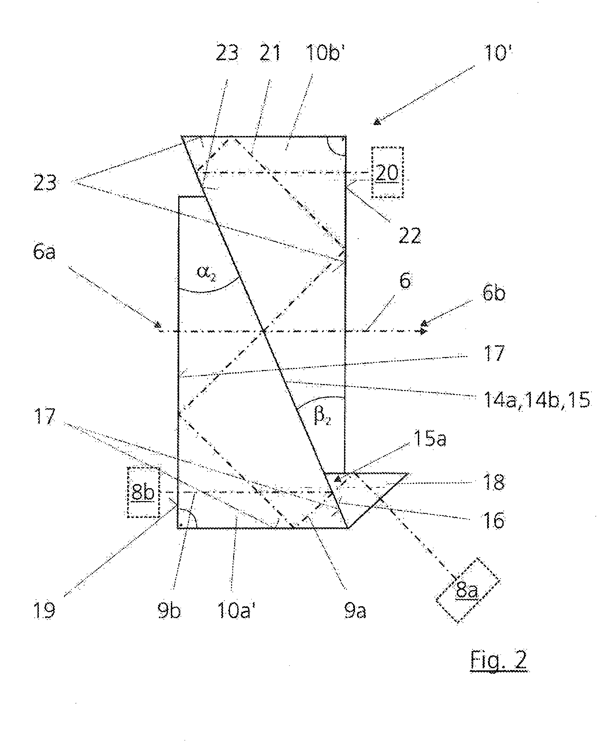

Die Sendeeinrichtung 8a des Entfernungsmessers 8, die Empfangseinrichtung 8b des Entfernungsmessers 8 und das Strahlteilerelement 10 sind derart bewegungsfest zueinander und zu dem Innenrohr 11 des Zielfernrohrs 1 fixiert, dass sie durch die Mittel 13 des Zielfernrohrs 1 zum Verstellen der Richtung der Visierlinie mitbewegbar sind. Dies ist ebenso bei den Anordnungen der Sendeeinrichtungen 8a, der Empfangseinrichtungen 8b und der Strahlteilerelemente 10', 10", 10"', 100 gemäß den Figuren 2 bis 4 und 10 der Fall. In den Figuren 2 bis 4 und 10 sind weitere Ausführungsformen von Strahlteilerelementen 10 dargestellt, welche mit den notwendigen Änderungen ebenfalls in dem erfindungsgemäßen Zielfernrohr 1 vorgesehen sein können.

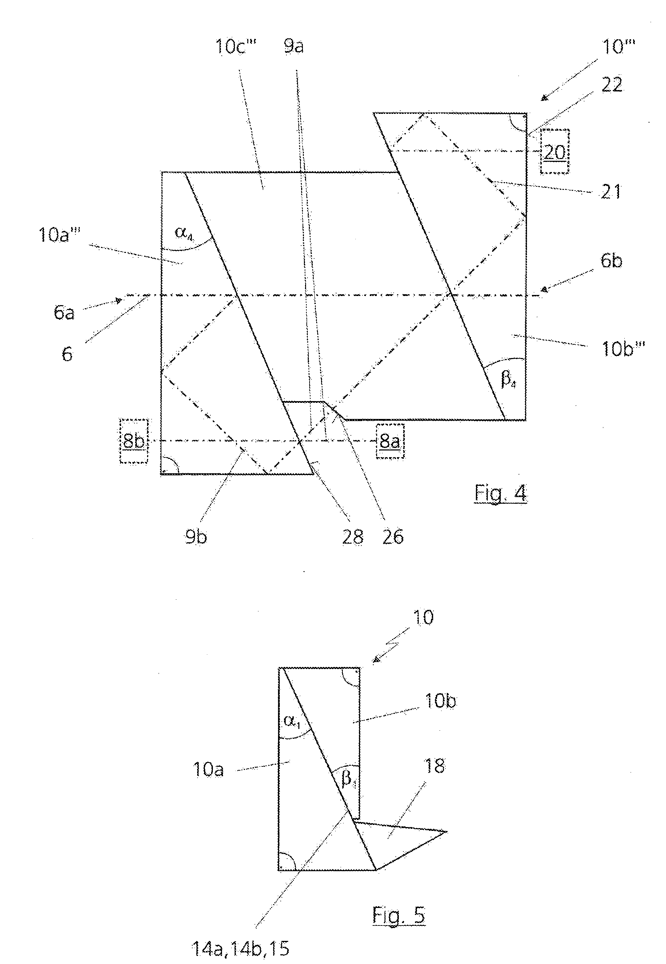

Das Strahlteilerelement 10 ist monolithisch ohne Bildumkehr ausgeführt und weist ein erstes objektivseitiges keilförmiges Teilprisma 10a und ein zweites okularseitiges keilförmiges Teilprisma 10b auf, welche jeweils Grenzflächen 14a, 14b aufweisen, zwischen denen eine erste Grenzebene 15 vorgesehen ist. Das Strahlteilerelement 10 in der ersten Ausführungsform ist in den Figuren 5 bis 9 näher dargestellt.

Die spitzen Winkel des ersten keilförmigen Teilprismas 10a und des zweiten keilförmigen Teilprismas 10b können in einem Bereich von 17,5° bis 35°, insbesondere in einem Bereich von 22,5° bis 30° liegen. Im vorliegenden Ausführungsbeispiel liegen die spitzen Winkel α₁, β₁ jeweils bei 25° (siehe Figur 5).

In Figur 2 ist eine zweite Ausführungsform eines Strahlteilerelements 10' schematisch dargestellt. Das erste keilförmige Teilprisma 10a' und das zweite keilförmige Teilprisma 10b' liegen an deren Grenzflächen 14a, 14b in der ersten Grenzebene 15 aneinander.

Die Grundflächen des ersten keilförmigen Teilprismas 10a' und des zweiten keilförmigen Teilprismas 10b' weisen jeweils einen rechten Winkel auf, welcher den jeweiligen Grenzflächen 14a, 14b des ersten keilförmigen Teilprismas 10a' und des zweiten keilförmigen Teilprismas 10b' gegenüberliegt.

Der von der Sendeeinrichtung 8a ausgehende Messstrahl 9a trifft auf eine erste Oberfläche 16 des ersten keilförmigen Teilprismas 10a', durchläuft das erste keilförmige Teilprisma 10a' unter mehreren Reflexionen an dessen Innenflächen 17, wird an der ersten Grenzebene 15 in den zu dem Objektiv 3 verlaufenden Teil 6a des Beobachtungsstrahlengangs 6 abgelenkt und auf das Zielobjekt 2 geleitet. Ein Prisma 18 ist als zusätzliches optisches Element an dem Strahlteilerelement 10' bzw. dem ersten keilförmigen Teilprisma 10a' angeordnet, durch welches der von der Sendeeinrichtung 8a ausgehende Messstrahl 9a auf die erste Oberfläche 16 des ersten keilförmigen Teilprismas 10a' geleitet wird.

Ein entlang des Beobachtungsstrahlengangs 6 auf das erste keilförmige Teilprisma 10a' auftreffender empfangener reflektierter Messstrahl 9b wird an der ersten Grenzebene 15 aus dem Beobachtungsstrahlengang 6 abgelenkt, durchläuft das erste keilförmige Teilprisma 10a' unter mehreren Reflexionen an dessen Innenflächen 17, tritt an einer zweiten Oberfläche 19 des ersten keilförmigen Teilprismas 10a' aus und wird auf die Empfangseinrichtung 8b geleitet.

Wie weiter aus Figur 2 ersichtlich, ist mittels des Strahlteilerelements 10' zusätzlich ein Bild einer Anzeigeeinrichtung 20 in den zu dem Okular 5 verlaufenden Teil 6b des Beobachtungsstrahlengangs 6 einkoppelbar. Das von der Anzeigeeinrichtung 20 ausgehende Anzeigelicht 21 trifft auf eine Oberfläche 22 des zweiten keilförmigen Teilprismas 10b', durchläuft das zweite keilförmige Teilprisma 10b' unter mehreren Reflexionen an dessen Innenflächen 23 und wird an der ersten Grenzebene 15 in dem zu dem Okular 5 verlaufenden Teil 6b des Beobachtungsstrahlengangs 6 umgelenkt.

Die Anzeigeeinrichtung 20 ist ebenfalls derart bewegungsfest zu der Sendeeinrichtung 8a des Entfernungsmessers 8, der Empfangseinrichtung 8b des Entfernungsmessers 8, dem Strahlteilerelement 10' und zu dem Innenrohr 11 des Zielfernrohrs 1 fixiert, dass die Anzeigeeinrichtung 20 durch die Mittel 13 des Zielfernrohrs 1 zum Verstellen der Richtung der Visierlinie mitbewegbar ist.

Die erste Grenzebene 15 weist in Ausbreitungsrichtung des visuellen Beobachtungslichts einen Transmissionsgrad von größer 95 % für das visuelle Beobachtungslicht und einen Reflexionsgrad von größer 99 % für den Wellenlängenbereich des Messstrahls 9a, 9b auf. Des Weiteren weist die erste Grenzebene 15 entgegen der Ausbreitungsrichtung des visuellen Beobachtungslichts einen Reflexionsgrad von größer 30 % für die Wellenlänge des Anzeigelichts 21 auf, wobei in dem Wellenlängenbereich des Anzeigelichts 21, beispielsweise ± 20 nm um die Anzeigewellenlänge, der Transmissionsgrad nur etwa 65 % beträgt. Die erste Grenzebene 15 weist in einem an das Prisma 18 angrenzenden Bereich 15a einen Reflexionsgrad von 70 % und einen Transmissionsgrad von 30 % für den Wellenlängenbereich des Messstrahls 9a, 9b auf. Die optischen Eigenschaften könnten auch komplementär gewählt werden, um denselben Effekt zu erzeugen. Somit wäre für den an das Prisma 18 angrenzenden Bereich der ersten Grenzebene 15 auch ein Transmissionsgrad von größer oder gleich 50 %, vorzugsweise etwa 70 % und ein Reflexionsgrad von kleiner oder gleich 50 %, vorzugsweise etwa 30 % für den Wellenlängenbereich des Messstrahls 9a, 9b denkbar.

Bei dem Strahlteilerelement 10' in Figur 2 betragen der spitze Winkel α₂ des ersten keilförmigen Teilprismas 10a' und der spitze Winkel β₂ des zweiten keilförmigen Teilprismas jeweils 22,5°.

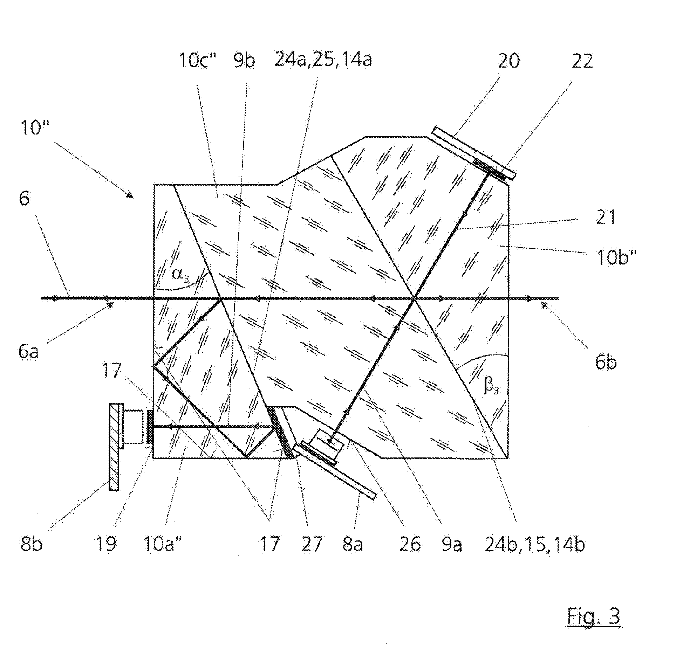

In Figur 3 ist eine dritte Ausführungsform eines Strahlteilerelements 10" gezeigt. Das Strahlteilerelement 10" weist ein zusätzliches drittes Teilprisma 10c" mit einer objektivseitigen Grenzfläche 24a und einer okularseitigen Grenzfläche 24b zwischen einem ersten keilförmigen Teilprisma 10a" und einem zweiten keilförmigen Teilprisma 10b" auf. Die Grenzfläche 14a des ersten keilförmigen Teilprismas 10a" und die objektivseitige Grenzfläche 24a des dritten Teilprismas 10c" liegen in einer zweiten Grenzebene 25 aneinander und die Grenzfläche 14b des zweiten keilförmigen Teilprismas 10b" und die okularseitige Grenzfläche 24b des dritten Teilprismas 10c" liegen in der ersten Grenzebene 15 aneinander. Der von der Sendeeinrichtung 8a ausgehende Messstrahl 9a trifft auf eine Oberfläche 26 des dritten Teilprismas 10c", durchläuft das dritte Teilprisma 10c", wird an der ersten Grenzebene 15 in den zu dem Objektiv 3 verlaufenden Teil 6a des Beobachtungsstrahlengangs 6 abgelenkt und auf das Zielobjekt 2 geleitet. Der entlang des Beobachtungsstrahlengangs 6 auf das erste keilförmige Teilprisma 10a" auftreffende empfangene reflektierte Messstrahl 9b wird an der zweiten Grenzebene 25 aus dem Beobachtungsstrahlengang 6 abgelenkt, durchläuft das erste keilförmige Teilprisma 10a" unter mehreren Reflexionen an dessen Innenflächen 17, tritt an der Oberfläche 19 des ersten keilförmigen Teilprismas 10a" aus und wird auf die Empfangseinrichtung 8b geleitet. Die erste Grenzebene 15 weist einen Transmissionsgrad von größer 95 % für das visuelle Beobachtungslicht und einen Reflexionsgrad von größer 99 % für den Wellenbereich des Messstrahls 9a, 9b auf. Die erste Grenzebene 15 weist einen Reflexionsgrad von größer 30 % bzw. einen Transmissionsgrad von kleiner 65 % für die Wellenlänge des Anzeigelichts 21 auf.

Die zweite Grenzebene 25 weist einen Transmissionsgrad von größer 95 % für das visuelle Beobachtungslicht sowie einen Reflexionsgrad von etwa 60 % bis etwa 80 %, vorzugsweise etwa 70 % und einen Transmissionsgrad von etwa 20 % bis etwa 40 %, vorzugsweise etwa 30 % für den Wellenlängenbereich des Messstrahls 9a, 9b auf. An dem ersten keilförmigen Teilprisma 10a" ist ein Spiegelelement 27 im Bereich der Sendeeinrichtung 8a vorgesehen. Das Spiegelelement 27 kann als Silberspiegel ausgeführt sein.

Bei dem Strahlteilerelement 10" in Figur 3 beträgt der spitze Winkel α₃ des ersten keilförmigen Teilprismas 10a" 22,5° und der spitze Winkel β₃ des zweiten keilförmigen Teilprismas 10b" 30°.

In Figur 4 ist eine vierte Ausführungsform eines Strahlteilerelements 10"' dargestellt. Der spitze Winkel α₄ des ersten keilförmigen Teilprismas 10a"' beträgt 22,5° und der spitze Winkel β₄ des zweiten keilförmigen Teilprismas 10b"' beträgt ebenfalls 22,5°. Dadurch wird es ermöglicht, dass das dritte Teilprisma 10c"' sozusagen als Parallelogramm ausgeführt werden kann. Der von der Sendeeinrichtung 8a ausgehende Messstrahl 9a wird zuerst an einer dritten reflektierenden Oberfläche 28 des ersten keilförmigen Teilprismas 10a"' reflektiert, bevor er auf die Oberfläche 26 des dritten Teilprismas 10c"' trifft.

Das erste keilförmige Teilprisma 10a, 10a', 10a", 10a"', 100a und das zweite keilförmige Teilprisma 10b, 10b', 10b", 10b"', 100b des Strahlteilerelements 10, 10', 10", 10"' sind derart verdreht zueinander angeordnet, dass das Strahlteilerelement 10, 10', 10", 10"' auch bei Vorhandensein des dritten Teilprismas 10c", 10c"' wenigstens in einem Teilbereich in Durchtrittsrichtung des Beobachtungsstrahlengangs 6 als planparallele Platte ausgebildet ist.

In Figur 5 ist die erste Ausführungsform des Strahlteilerelements 10 näher dargestellt, welches in dem erfindungsgemäßen Zielfernrohr 1 aus Figur 1 vorgesehen ist. Das Prisma 18 ist ebenfalls an dem Strahlteilerelement 10 angeordnet.

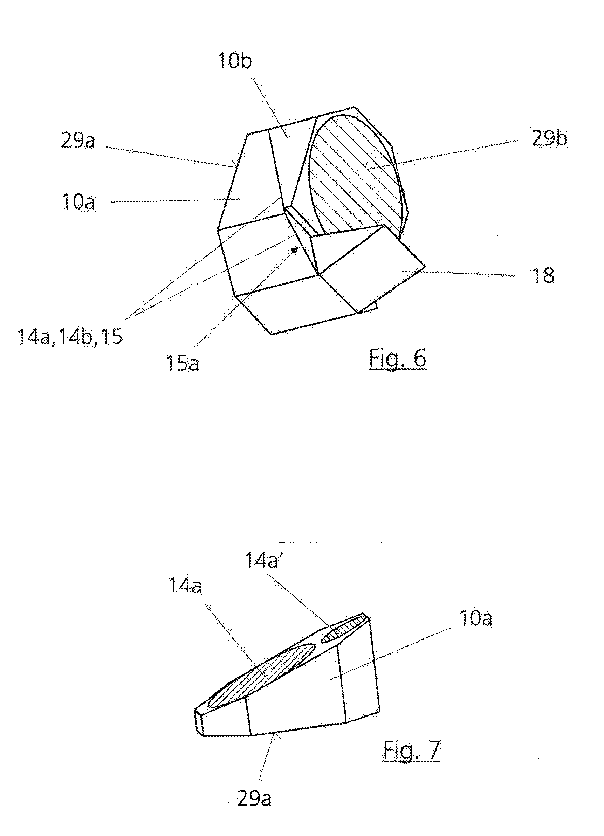

In den Figuren 6 bis 9 sind perspektivische Darstellungen des Strahlteilerelements 10 bzw. von dessen Teilelementen 10a, 10b, 18 dargestellt. Die Teilelemente 10a, 10b, 18 werden z. B. durch Kitten oder dergleichen zu dem monolithischen Strahlteilerelement 10 zusammengefügt. Vereinfacht sind die optisch wirksamen Bereiche in den Figuren 6 bis 9 schraffiert hervorgehoben.

Figur 6 zeigt eine perspektivische Darstellung des gesamten monolithischen Strahlteilerelements 10.

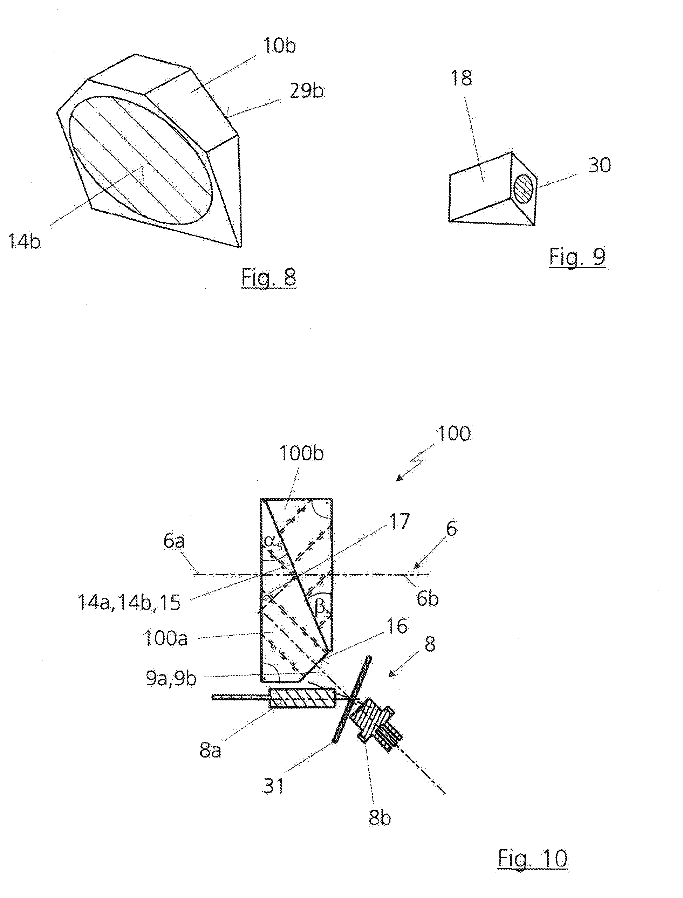

Das erste keilförmige Teilprisma 10a und das zweite keilförmige Teilprisma 10b sind in den Figuren 7 und 8 ebenfalls perspektivisch dargestellt.

Die Grenzfläche 14a und die der Grenzfläche 14a gegenüber liegende Fläche 29a des ersten keilförmigen Teilprismas 10a weisen jeweils einen Transmissionsgrad von größer 99 % für Strahlung in einem Wellenlängenbereich von 380 nm bis 950 nm auf. Die Grenzfläche 14a kann auch einen Bereich 14a' mit einem Reflexionsgrad von etwa 60 % bis etwa 80 %, vorzugsweise etwa 70 % und einem Transmissionsgrad von etwa 20 % bis etwa 40 %, vorzugsweise etwa 30 % für die Strahlung in einem Wellenlängenbereich von 850 nm bis 950 nm aufweisen, wodurch die erste Grenzebene 15 diese optische Eigenschaft in dem an das Prisma 18 angrenzenden Bereich 15a aufweist. Alternativ kann wie in Figur 9 angedeutet eine entsprechende Kontaktfläche 30 des Prismas 18 mit dem ersten keilförmigen Teilprisma 10a einen Reflexionsgrad von etwa 60 % bis etwa 80 %, vorzugsweise etwa 70 % und einen Transmissionsgrad von etwa 20 % bis etwa 40 %, vorzugsweise etwa 30 % für die Strahlung in einem Wellenlängenbereich von 850 nm bis 950 nm aufweisen.

Die Grenzfläche 14b des zweiten keilförmigen Teilprismas 10b weist einen Transmissionsgrad von größer 95 % für Strahlung im Wellenlängenbereich von 350 nm bis 700 nm und einen Reflexionsgrad von größer 99 % für Strahlung in einem Wellenlängenbereich von 850 nm bis 950 nm auf. In weiteren Ausführungsbeispielen könnte auch die Grenzfläche 14a einen Reflexionsgrad von größer 99 % für die Strahlung in einem Wellenlängenbereich von 850 nm bis 950 nm aufweisen. Die der Grenzfläche 14b gegenüber liegende Fläche 29b des zweiten keilförmigen Teilprismas 10b weist einen Transmissionsgrad von größer 99 % für Strahlung in einem Wellenlängenbereich von 350 nm bis 700 nm auf.

Figur 9 zeigt das Prisma 18 in einer perspektivischen Ansicht.

In Figur 10 ist zur Teilung von ausgesendetem und empfangenem, reflektierten Messstrahl 9a, 9b in Strahlrichtung zwischen einem Strahlteilerelement 100 einerseits und der Sendeeinrichtung 8a des Entfernungsmessers 8 und der Empfangseinrichtung 8b des Entfernungsmessers 8 andererseits ein weiteres Teilerelement 31 angeordnet. Das Strahlteilerelement 100 ist ebenfalls monolithisch ohne Bildumkehr ausgeführt und weist ein erstes objektivseitiges keilförmiges Teilprisma 100a und ein zweites okularseitiges keilförmiges Teilprisma 100b auf, welche jeweils Grenzflächen 14a, 14b aufweisen, zwischen denen eine erste Grenzebene 15 vorgesehen ist. Die spitzen Winkel α₅, β₅ betragen jeweils 25°. Wie aus Figur 10 weiter ersichtlich, trifft der von der Sendeeinrichtung 8a ausgehende Messstrahl 9a nach Ablenkung an dem weiteren Teilerelement 31 auf eine erste Oberfläche 16 des ersten keilförmigen Teilprismas 100a, durchläuft das erste keilförmige Teilprisma 100a unter einer Reflexion an dessen Innenfläche 17 und wird an der ersten Grenzebene 15 in den zu dem Objektiv 3 verlaufenden Teil 6a des Beobachtungsstrahlengangs 6 abgelenkt und auf ein Zielobjekt 2 (in Figur 10 nicht dargestellt) geleitet. Ein entlang des Beobachtungsstrahlengangs 6 auf das erste keilförmige Teilprisma 100a auftreffender empfangener reflektierter Messstrahl 9b wird an der ersten Grenzebene 15 aus dem Beobachtungsstrahlengang 6 abgelenkt, durchläuft das erste keilförmige Teilprisma 100a unter einer Reflexion an dessen Innenfläche 17, tritt an der ersten Oberfläche 16 des ersten keilförmigen Teilprismas 100a aus und wird durch das weitere Teilerelement 31 auf die Empfangseinrichtung 8b geleitet.

Das weitere Teilerelement 31 ist ebenfalls derart bewegungsfest zu der Sendeeinrichtung 8a des Entfernungsmessers 8, der Empfangseinrichtung 8b des Entfernungsmessers 8, dem Strahlteilerelement 100 und zu dem Innenrohr 11 des Zielfernrohrs 1 fixiert, dass das weitere Teilerelement 31 durch die Mittel 13 des Zielfernrohrs 1 zum Verstellen der Richtung der Visierlinie mitbewegbar ist. Das weitere Teilerelement 31 weist einen Reflexionsgrad von größer oder gleich 50 %, vorzugsweise etwa 70 % und einen Transmissionsgrad von kleiner oder gleich 50 %, vorzugsweise etwa 30 % für den Wellenlängenbereich des Messstrahls 9a, 9b auf. Die optischen Eigenschaften könnten auch komplementär gewählt werden, um denselben Effekt zu erzeugen. Somit wäre für das weitere Teilerelement 31 auch ein Transmissionsgrad von größer oder gleich 50 %, vorzugsweise etwa 70 % und ein Reflexionsgrad von kleiner oder gleich 50 %, vorzugsweise etwa 30 % für den Wellenlängenbereich des Messstrahls 9a, 9b denkbar.

Das Anzeigelicht 21 kann in einem Wellenlängenbereich von 630 nm bis 690 nm liegen.

Der Messstrahl 9a, 9b kann in einem Wellenlängenbereich von 850 nm bis 950 nm, vorzugsweise bei 905 nm liegen.

Aufgrund der Umkehrbarkeit der Strahlungswege bzw. Strahlungsrichtungen können die Positionen der Sendeeinrichtungen 8a und der Empfangseinrichtungen 8b des Entfernungsmessers 8 in sämtlichen, in den Figuren 1 bis 4 und 10 dargestellten, Anordnungen vertauscht werden. Ebenso ist es wie vorstehend ausgeführt auch möglich, die optischen Eigenschaften bzw. die Teilerverhältnisse der Teilerelemente komplementär auszuführen.

### Bezugszeichenliste

- 1: Zielfernrohr
- 2: Zielobjekt
- 3: Objektiv
- 4: Beobachter
- 5: Okular
- 6: Beobachtungsstrahlengang
- 6a: zu dem Objektiv verlaufender Teil des Beobachtungsstrah- lengangs
- 6b: zu dem Okular verlaufender Teil des Beobachtungsstrahlen- gangs
- 7: Fernrohrgehäuse
- 8: Entfernungsmesser
- 8a: Sendeeinrichtung
- 8b: Empfangseinrichtung
- 9a: Messstrahl
- 9b: empfangener reflektierter Messstrahl
- 10: Strahlteilerelement gemäß 1. Ausführungsform
- 10': Strahlteilerelement gemäß 2. Ausführungsform
- 10": Strahlteilerelement gemäß 3. Ausführungsform
- 10"': Strahlteilerelement gemäß 4. Ausführungsform
- 100: Strahlteilerelement gemäß 5. Ausführungsform
- 10a: erstes keilförmiges Teilprisma des Strahlteilerelements gemäß 1. Ausführungsform
- 10a': erstes keilförmiges Teilprisma des Strahlteilerelements gemäß 2. Ausführungsform
- 10a": erstes keilförmiges Teilprisma des Strahlteilerelements gemäß 3. Ausführungsform
- 10a"': erstes keilförmiges Teilprisma des Strahlteilerelements gemäß 4. Ausführungsform
- 100a: erstes keilförmiges Teilprisma des Strahlteilerelements gemäß 5. Ausführungsform
- 10b: zweites keilförmiges Teilprisma des Strahlteilerelements gemäß 1. Ausführungsform
- 10b': zweites keilförmiges Teilprisma des Strahlteilerelements gemäß 2. Ausführungsform
- 10b": zweites keilförmiges Teilprisma des Strahlteilerelements gemäß 3. Ausführungsform
- 10b"': zweites keilförmiges Teilprisma des Strahlteilerelements gemäß 4. Ausführungsform
- 100b: zweites keilförmiges Teilprisma des Strahlteilerelements gemäß 5. Ausführungsform
- 10c": zusätzliches drittes Teilprisma des Strahlteilerelements gemäß 3. Ausführungsform
- 10c"': zusätzliches drittes Teilprisma des Strahlteilerelements gemäß 4. Ausführungsform
- 11: Innenrohr
- 12: Umkehrsystem
- 13: Mittel zum Verstellen der Visierlinie
- 14a: Grenzfläche des 1. keilförmigen Teilprismas
- 14b: Grenzfläche des 2. keilförmigen Teilprismas
- 15: erste Grenzebene
- 15a: an das Prisma angrenzender Bereich der ersten Grenzebene
- 16: erste Oberfläche des ersten keilförmigen Teilprismas
- 17: Innenflächen des ersten keilförmigen Teilprismas
- 18: Prisma
- 19: zweite Oberfläche des ersten keilförmigen Teilprismas
- 20: Anzeigeeinrichtung
- 21: Anzeigelicht
- 22: Oberfläche des zweiten keilförmigen Teilprismas
- 23: Innenfläche des zweiten keilförmigen Teilprismas
- 24a: Grenzfläche des dritten Teilprismas
- 24b: Grenzfläche des dritten Teilprismas
- 25: zweite Grenzebene
- 26: Oberfläche des dritten Teilprismas
- 27: Spiegelelement
- 28: dritte reflektierende Oberfläche des ersten keilförmigen Teilprismas
- 29a: der Grenzfläche 14a gegenüber liegende Fläche des ersten keilförmigen Teilprismas
- 29b: der Grenzfläche 14b gegenüber liegende Fläche des zweiten keilförmigen Teilprismas
- 30: Kontaktfläche des Prismas 18 mit dem ersten keilförmigen Teilprisma
- 31: weiteres Teilerelement
- α₁ bis α₅: spitzer Winkel des ersten keilförmigen Teilprismas
- β₁ bis β₅: spitzer Winkel des zweiten keilförmigen Teilprismas

## Patentansprüche

1. Zielfernrohr (1) mit einem in Betriebsstellung einem zu beobachtenden Zielobjekt (2) zuzuwendenden Objektiv (3), einem einem Beobachter (4) zuzuwendenden Okular (5), einem visuellen Beobachtungsstrahlengang (6), einem Innenrohr (11) mit einem Umkehrsystem (12), Mitteln (13) zum Verstellen der Richtung der Visierlinie des Zielfernrohrs (1), einem Entfernungsmesser (8) und mit einem Fernrohrgehäuse (7), in welchem der Entfernungsmesser (8), welcher eine Sendeeinrichtung (8a) zum Aussenden eines Messstrahls (9a) und eine Empfangseinrichtung (8b) zum Empfangen des reflektierten Messstrahls (9b) aufweist, und ein im Bereich des Beobachtungsstrahlengangs (6) angeordnetes Strahlteilerelement (10,10',10" ,10"',100), welches den ausgesendeten Messstrahl (9a) in den zu dem Objektiv (3) verlaufenden Teil (6a) des Beobachtungsstrahlengangs (6) einkoppelt und/oder den empfangenen, reflektierten Messstrahl (9b) aus dem zu dem Objektiv (3) verlaufenden Teil (6a) des Beobachtungsstrahlengangs (6) auskoppelt, integriert sind, **dadurch gekennzeichnet, dass** die Sendeeinrichtung (8a) des Entfernungsmessers (8), die Empfangseinrichtung (8b) des Entfernungsmessers (8) und das Strahlteilerelement (10,10',10" ,10''',100) derart bewegungsfest zueinander und zu dem Innenrohr (11) des Zielfernrohrs (1) fixiert sind, dass sie durch die Mittel (13) des Zielfernrohrs (1) zum Verstellen der Richtung der Visierlinie mitbewegbar sind.

2. Zielfernrohr nach Anspruch 1, **dadurch gekennzeichnet, dass** das Strahlteilerelement (10,10',10'',10''',100) monolithisch ohne Bildumkehr ausgeführt ist und wenigstens ein erstes objektivseitiges keilförmiges Teilprisma (10a, 10a', 10a'', 10a''', 100a) und wenigstens ein zweites okularseitiges keilförmiges Teilprisma (10b,10b',10b'',10b''',100b) aufweist, welche jeweils Grenzflächen (14a,14b) aufweisen, zwischen denen wenigstens eine erste Grenzebene (15) vorgesehen ist.

3. Zielfernrohr nach Anspruch 2, **dadurch gekennzeichnet, dass** die spitzen Winkel (α₁-α₅, β₁-β₅) des ersten keilförmigen Teilprismas (10a,10a',10a'',10a''',100a) und des zweiten keilförmigen Teilprismas (10b,10b',10b'',10b''',100b) in einem Bereich von 17,5 Grad bis 35 Grad, insbesondere in einem Bereich von 22,5 Grad bis 30 Grad, vorzugsweise bei etwa 25 Grad liegen.

4. Zielfernrohr nach Anspruch 2 oder 3, **dadurch gekennzeichnet, dass** die Grundflächen des ersten keilförmigen Teilprismas (10a, 10a',10a'',10a''',100a) und des zweiten keilförmigen Teilprismas (10b,10b',10b'',10b''',100b) jeweils einen rechten Winkel aufweisen, welcher den jeweiligen Grenzflächen (14a,14b) des ersten keilförmigen Teilprismas (10a,10a',10a'', 10a'',100a) und des zweiten keilförmigen Teilprismas (10b, 10b',10b'',10b''',100b) gegenüber liegt.

5. Zielfernrohr nach Anspruch 2, 3 oder 4, **dadurch gekennzeichnet, dass** das erste keilförmige Teilprisma (10a,10a', 100a) und das zweite keilförmige Teilprisma (10b,10b',100b) an ihren Grenzflächen (14a,14b) in der ersten Grenzebene (15) aneinander liegen.

6. Zielfernrohr nach einem der Ansprüche 2 bis 5, **dadurch gekennzeichnet, dass** der von der Sendeeinrichtung (8a) ausgehende Messstrahl (9a) auf eine erste Oberfläche (16) des ersten keilförmigen Teilprismas (10a,10a',100a) trifft, das erste keilförmige Teilprisma (10a,10a',100a) unter einer oder mehreren Reflexionen an dessen Innenflächen (17) durchläuft, an der ersten Grenzebene (15) in den zu dem Objektiv (3) verlaufenden Teil (6a) des Beobachtungsstrahlengangs (6) abgelenkt und auf ein Zielobjekt (2) geleitet wird.

7. Zielfernrohr nach Anspruch 6, **dadurch gekennzeichnet, dass** ein zusätzliches optisches Element, insbesondere ein Prisma (18) an dem Strahlteilerelement (10,10') oder dem ersten keilförmigen Teilprisma (10a, 10a') angeordnet ist, durch welches der von der Sendeeinrichtung (8a) ausgehende Messstrahl (9a) auf die erste Oberfläche (16) des ersten keilförmigen Teilprismas (10a,10a') geleitet wird.

8. Zielfernrohr nach Anspruch 7, **dadurch gekennzeichnet, dass** die erste Grenzebene (15) in einem an das zusätzliche optische Element (18) angrenzenden Bereich (15a) einen Reflexionsgrad von größer oder gleich 50 %, vorzugsweise etwa 70 % und einen Transmissionsgrad von kleiner oder gleich 50 %, vorzugsweise etwa 30 % für den Wellenlängenbereich des Messstrahls (9a,9b) aufweist.

9. Zielfernrohr nach einem der Ansprüche 2 bis 8, **dadurch gekennzeichnet, dass** ein entlang des Beobachtungsstrahlengangs (6) auf das erste keilförmige Teilprisma (10a,10a',10a'', 10a''') auftreffender empfangener reflektierter Messstrahl (9b) an der ersten Grenzebene (15) aus dem Beobachtungsstrahlengang (6) abgelenkt wird, das erste keilförmige Teilprisma (10a,10a',10a'',10a'') unter mehreren Reflexionen an dessen Innenflächen (17) durchläuft, an einer zweiten Oberfläche (19) des ersten keilförmigen Teilprismas (10a,10a',10a'',10a''') austritt und auf die Empfangseinrichtung (8b) geleitet wird.

10. Zielfernrohr nach einem der Ansprüche 1 bis 9, **dadurch gekennzeichnet, dass** das Zielfernrohr (1) zusätzlich eine Anzeigeeinrichtung (20) zur Anzeige eines Bildes in dem Beobachtungsstrahlengang (6) aufweist.

11. Zielfernrohr nach Anspruch 10, **dadurch gekennzeichnet, dass** das Bild der Anzeigeeinrichtung (20) mittels des Strahlteilerelements (10,10',10'',10'',100) in den zu dem Okular (5) verlaufenden Teil (6b) des Beobachtungsstrahlengangs (6) einkoppelbar ist.

12. Zielfernrohr nach Anspruch 10 oder 11, **dadurch gekennzeichnet, dass** die Anzeigeeinrichtung (20) ebenfalls derart bewegungsfest zu der Sendeeinrichtung (8a) des Entfernungsmessers (8), der Empfangseinrichtung (8b) des Entfernungsmessers (8), dem Strahlteilerelement (10,10',10'',10''',100) und zu dem Innenrohr (11) des Zielfernrohrs (1) fixiert ist, dass die Anzeigeeinrichtung (20) durch die Mittel (13) des Zielfernrohrs (1) zum Verstellen der Richtung der Visierlinie mitbewegbar ist.

13. Zielfernrohr nach Anspruch 10, 11 oder 12, **dadurch gekennzeichnet, dass** ein von der Anzeigeeinrichtung (20) ausgehendes Anzeigelicht (21) auf eine Oberfläche (22) des zweiten keilförmigen Teilprismas (10b,10b',10b'',10b''') trifft, das zweite keilförmige Teilprisma (10b,10b',10b'',10b'''), insbesondere unter mehreren Reflexionen an dessen Innenflächen (23), durchläuft und an der ersten Grenzebene (15) in den zu dem Okular (5) verlaufenden Teil (6b) des Beobachtungsstrahlengangs (6) abgelenkt wird.

14. Zielfernrohr nach einem der Ansprüche 1 bis 13, **dadurch gekennzeichnet, dass** die erste Grenzebene (15) wenigstens in einem Teilbereich einen Transmissionsgrad von größer oder gleich 95 % für das visuelle Beobachtungslicht und einen Reflexionsgrad von größer oder gleich 99 % für den Wellenlängenbereich des Messstrahls (9a,9b) aufweist.

15. Zielfernrohr nach einem der Ansprüche 1 bis 14, **dadurch gekennzeichnet, dass** die erste Grenzebene (15) wenigstens in einem Teilbereich einen Reflexionsgrad von größer oder gleich 30 % für die Wellenlänge des Anzeigelichts (21) aufweist, wobei in dem Wellenlängenbereich des Anzeigelichts (21) der Transmissionsgrad nur etwa 65 % beträgt.

16. Zielfernrohr nach einem der Ansprüche 2 bis 15, **dadurch gekennzeichnet, dass** das erste keilförmige Teilprisma (10a,10a',10a'',10a''',100a) und das zweite keilförmige Teilprisma (10b,10b',10b'',10b''',100b) des Strahlteilerelements (10, 10',10'',10''',100) derart zueinander verdreht angeordnet sind, dass das Strahlteilerelement (10,10',10'',10''',100) wenigstens in einem Teilbereich in Durchtrittsrichtung des Beobachtungsstrahlengangs (6) als planparallele Platte ausgebildet ist.

17. Zielfernrohr nach einem der Ansprüche 1 bis 6, **dadurch gekennzeichnet, dass** zur Teilung von ausgesendetem und empfangenem, reflektierten Messstrahl (9a,9b) in Strahlrichtung zwischen dem Strahlteilerelement (100) einerseits und der Sendeeinrichtung (8a) des Entfernungsmessers (8) und der Empfangseinrichtung (8b) des Entfernungsmessers (8) andererseits ein weiteres Teilerelement (31) angeordnet ist.

18. Zielfernrohr nach Anspruch 17, **dadurch gekennzeichnet, dass** das weitere Teilerelement (31) ebenfalls derart bewegungsfest zu der Sendeeinrichtung (8a) des Entfernungsmessers (8), der Empfangseinrichtung (8b) des Entfernungsmessers (8), dem Strahlteilerelement (100) und zu dem Innenrohr (11) des Zielfernrohrs (1) fixiert ist, dass das weitere Teilerelement (31) durch die Mittel (13) des Zielfernrohrs (1) zum Verstellen der Richtung der Visierlinie mitbewegbar ist.

19. Zielfernrohr nach Anspruch 17 oder 18, **dadurch gekennzeichnet, dass** das weitere Teilerelement (31) einen Reflexionsgrad von größer oder gleich 50 %, vorzugsweise etwa 70 % und einen Transmissionsgrad von kleiner oder gleich 50 %, vorzugsweise etwa 30 % für den Wellenlängenbereich des Messstrahls (9a,9b) aufweist.

## Claims

1. Telescopic sight (1) with an objective (3) to be made to face a target object (2) to be observed in a working position, an eyepiece (5) to be made to face an observer (4), a visual observation beam path (6), an inner tube (11) with an inversion system (12), means (13) for adjusting the direction of the sight line of the telescopic sight (1), a rangefinder (8) and with a scope housing (7), in which are integrated the rangefinder (8), which has a transmitter (8a) for emitting a measurement beam (9a) and a receiver (8b) for receiving the reflected measurement beam (9b), and a beam splitter element (10, 10'; 10", 10''', 100) arranged in the region of the observation beam path (6), which couples the emitted measurement beam (9a) into the part (6a) of the observation beam path (6) extending toward the objective (3) and/or decouples the received reflected measurement beam (9b) from the part (6a) of the observation beam path (6) extending toward the objective (3), **characterized in that** the transmitter (8a) of the rangefinder (8), the receiver (8b) of the rangefinder (8) and the beam splitter element (10, 10', 10", 10"', 100) are fixed in an immovable fashion with respect to each other and to the inner tube (11) of the telescopic sight (1) such that they are also movable by the means (13) of the telescopic sight (1) for adjusting the direction of the sight line.

2. Telescopic sight according to claim 1, **characterized in that** the beam splitter element (10, 10', 10", 10"', 100) has a monolithic design without image inversion and has at least a first objective-side wedge-shaped subprism (10a, 10a', 10a", 10a"', 100a) and at least a second eyepiece-side wedge-shaped subprism (10b, 10b', 10b", 10b"', 100b), which respectively have interfaces (14a, 14b), between which at least a first interface plane (15) is provided.

3. Telescopic sight according to claim 2, **characterized in that** the acute angles (α₁ - α₅, β₁ - β₅) of the first wedge-shaped subprism (10a, 10a', 10a", 10a"', 100a) and of the second wedge-shaped subprism (10b, 10b', 10b", 10b"', 100b) lie in a range between 17.5 degrees and 35 degrees, more particularly in a range between 22.5 degrees and 30 degrees, preferably at approximately 25 degrees.

4. Telescopic sight according to claim 2 or 3, **characterized in that** the bases of the first wedge-shaped subprism (10a, 10a', 10a", 10a"', 100a) and of the second wedge-shaped subprism (10b, 10b', 10b", 10b"', 100b) each have a right angle, situated opposite the respective interfaces (14a, 14b) of the first wedge-shaped subprism (10a, 10a', 10a", 10a"', 100a) and of the second wedge-shaped subprism (10b, 10b', 10b", 10b"', 100b).

5. Telescopic sight according to claim 2, 3 or 4, **characterized in that** the interfaces (14a, 14b) of the first wedge-shaped subprism (10a, 10a', 100a) and the second wedge-shaped subprism (10b, 10b', 100b) abut in the first interface plane (15).

6. Telescopic sight according to one of claims 2 to 5, **characterized in that** the measurement beam (9a) emanating from the transmitter (8a) impinges on a first surface (16) of the first wedge-shaped subprism (10a, 10a', 100a), traverses the first wedge-shaped subprism (10a, 10a', 100a) under one or more reflections on the inner faces (17) thereof, is deflected into the part (6a) of the observation beam path (6) extending toward the objective (3) at the first interface plane (15) and is guided to a target object (2).

7. Telescopic sight according to claim 6, **characterized in that** an additional optical element, more particularly a prism (18), is arranged on the beam splitter element (10, 10') or on the first wedge-shaped subprism (10a, 10a'), by means of which optical element the measurement beam (9a) emanating from the transmitter (8a) is guided onto the first surface (16) of the first wedge-shaped subprism (10a, 10a').

8. Telescopic sight according to claim 7, **characterized in that** the first interface plane (15) has, in a region (15a) adjoining the additional optical element (18), a reflectance greater than or equal to 50%, preferably approximately 70%, and a transmittance less than or equal to 50%, preferably approximately 30%, for the wavelength range of the measurement beam (9a, 9b).

9. Telescopic sight according to one of claims 2 to 8, **characterized in that** a received reflected measurement beam (9b) incident on the first wedge-shaped subprism (10a, 10a', 10a", 10a"') along the observation beam path (6) is deflected out of the observation beam path (6) at the first interface plane (15), traverses the first wedge-shaped subprism (10a, 10a', 10a", 10a"') under a plurality of reflections on the inner faces (17) thereof, emerges from a second surface (19) of the first wedge-shaped subprism (10a, 10a', 10a", 10a"') and is guided onto the receiver (8b).

10. Telescopic sight according to one of claims 1 to 9, **characterized in that** the telescopic sight (1) additionally has a display device (20) for displaying an image in the observation beam path (6).

11. Telescopic sight according to claim 10, **characterized in that** the image from the display device (20) can be coupled into the part (6b) of the observation beam path (6) extending toward the eyepiece (5) by means of the beam splitter element (10, 10', 10", 10"', 100).

12. Telescopic sight according to claim 10 or 11, **characterized in that** the display device (20) is likewise fixed in an immovable fashion to the transmitter (8a) of the rangefinder (8), the receiver (8b) of the rangefinder (8), the beam splitter element (10, 10', 10", 10"', 100) and to the inner tube (11) of the telescopic sight (1) such that the display device (20) is also movable by the means (13) of the telescopic sight (1) for adjusting the direction of the sight line.

13. Telescopic sight according to claim 10, 11 or 12, **characterized in that** a display light (21) emanating from the display device (20) impinges on a surface (22) of the second wedge-shaped subprism (10b, 10b', 10b", 10b"'), traverses the second wedge-shaped subprism (10b, 10b', 10b", 10b"'), in particular under a plurality of reflections on the inner faces (23) thereof, and is deflected into the part (6b) of the observation beam path (6) extending toward the eyepiece (5) at the first interface plane (15).

14. Telescopic sight according to one of claims 1 to 13, **characterized in that** the first interface plane (15) in at least one portion has a transmittance greater than or equal to 95% for the visual observation light and a reflectance greater than or equal to 99% for the wavelength range of the measurement beam (9a, 9b).

15. Telescopic sight according to one of claims 1 to 14, **characterized in that** the first interface plane (15) in at least one portion has a reflectance greater than or equal to 30% for the wavelength of the display light (21), wherein the transmittance is only approximately 65% in the wavelength range of the display light (21).

16. Telescopic sight according to one of claims 2 to 15, **characterized in that** the first wedge-shaped subprism (10a, 10a', 10a", 10a"', 100a) and the second wedge-shaped subprism (10b, 10b', 10b", 10b"', 100b) of the beam splitter element (10, 10', 10", 10"', 100) are arranged twisted with respect to one another such that the beam splitter element (10, 10', 10", 10"', 100) is designed as a plane-parallel plate in at least one portion in the traversal direction of the observation beam path (6).

17. Telescopic sight according to one of claims 1 to 6, **characterized in that** a further splitter element (31) is arranged for splitting emitted and received reflected measurement beams (9a, 9b) in the beam direction between the beam splitter element (100), on one hand, and the transmitter (8a) of the rangefinder (8) and the receiver (8b) of the rangefinder (8), on the other hand.

18. Telescopic sight according to claim 17, **characterized in that** the further splitter element (31) is likewise fixed in an immovable fashion to the transmitter (8a) of the rangefinder (8), the receiver (8b) of the rangefinder (8), the beam splitter element (100) and to the inner tube (11) of the telescopic sight (1) such that the further splitter element (31) is also movable by the means (13) of the telescopic sight (1) for adjusting the direction of the sight line.

19. Telescopic sight according to claim 17 or 18, **characterized in that** the further splitter element (31) has a reflectance greater than or equal to 50%, preferably approximately 70%, and a transmittance less than or equal to 50%, preferably approximately 30%, for the wavelength range of the measurement beam (9a, 9b).

## Revendications

1. Lunette de visée (1) ayant une lentille (3) faisant face à une cible à observer (2) en position de fonctionnement, un oculaire (5) faisant face à un observateur (4), un trajet optique de faisceau d'observation (6), un tube intérieur (11) ayant un système d'inversion (12), des moyens (13) pour ajuster la direction de la ligne de visée de la lunette de visée (1), un télémètre (8), et ayant un boîtier de lunette (7), dans lequel sont intégrés le télémètre (8), qui comprend un dispositif d'émission (8a) destiné à émettre un faisceau de mesure (9a) et un dispositif de réception (8b) destiné à recevoir le faisceau de mesure réfléchi (9b) et, agencé dans la zone du trajet optique de faisceau d'observation (6), un élément séparateur de faisceau (10, 10', 10", 10"', 100), qui couple optiquement le faisceau de mesure émis (9a) à la partie (6a) s'étendant vers la lentille (3) du trajet optique de faisceau d'observation (6) et/ou découple optiquement le faisceau de mesure (9b) réfléchi reçu hors de la partie (6a) s'étendant vers la lentille (6a) du trajet optique de faisceau d'observation (6), **caractérisée en ce que** le dispositif d'émission (8a) du télémètre (8), le dispositif de réception (8b) du télémètre (8) et l'élément séparateur de faisceau (10, 10', 10", 10"', 100) sont fixés solidairement les uns aux autres et au tube intérieur (11) de la lunette de visée (1) de sorte qu'ils sont déplacés ensemble par les moyens (13) de la lunette de visée (1) pour le réglage de la direction de la ligne de visée.

2. Lunette de visée selon la revendication 1, **caractérisée en ce que** l'élément séparateur de faisceau (10, 10', 10", 10"', 100) est réalisé de façon monolithique sans inversion d'image, et présente au moins un premier sous-prisme en forme de coin côté lentille (10a, 10a', 10a", 10a"', 100a) et au moins un deuxième sous-prisme en forme de coin côté oculaire (10b, 10b', 10b", 10b"', 100b), présentant chacun des surfaces de délimitation (14a, 14b), entre lesquelles au moins un premier plan de délimitation (15) est prévu.

3. Lunette de visée selon la revendication 2, **caractérisée en ce que** l'angle aigu (α₁-α₅, β₁-β₅) du premier sous-prisme en forme de coin (10a, 10a', 10a", 10a"', 100a) et du deuxième sous-prisme en forme de coin (10b, 10b', 10b", 10b"', 100b) sont dans une plage de 17,5 degrés à 35 degrés, en particulier dans une plage de 22,5 degrés à 30 degrés, de préférence d'environ 25 degrés.

4. Lunette de visée selon la revendication 2 ou 3, **caractérisée en ce que** les surfaces de base du premier sous-prisme en forme de coin (10a, 10a', 10a", 10a"', 100a) et du deuxième sous-prisme en forme de coin (10b, 10b', 10b", 10b"', 100b) présentent chacune un angle droit, les interfaces respectives (14a, 14b) du premier sous-prisme en forme de coin (10a, 10a ', 10a ", 10a"', 100a) et du deuxième sous-prisme en forme de coin (10b, 10b', 10b", 10b"', 100b) étant opposées.

5. Lunette de visée selon la revendication 2, 3 ou 4, **caractérisée en ce que** le premier sous-prisme en forme de coin (10a, 10a', 100a) et le deuxième sous-prisme en forme de coin (10b, 10b', 100b) sont adjacents l'un à l'autre au niveau de leurs interfaces (14a, 14b) dans le premier plan de délimitation (15).

6. Lunette de visée selon l'une quelconque des revendications 2 à 5, **caractérisée en ce que** le faisceau de mesure (9a) sortant du dispositif d'émission (8a) rencontre une première surface supérieure (16) du premier sous-prisme en forme de coin (10a, 10a', 100a), passe le premier sous-prisme en forme de coin (10a, 10a', 100a) au travers d'une ou de plusieurs réflexions sur ses surfaces intérieures (17), est dévié au niveau du premier plan de délimitation (15) dans la partie (6a) du trajet optique de faisceau d'observation (6) s'étendant vers la lentille (3), et va être dirigé vers la cible (2).

7. Lunette de visée selon la revendication 6, **caractérisée en ce qu'**un élément optique supplémentaire est fourni, en particulier un prisme (18) au niveau de l'élément séparateur de faisceau (10,10') ou du premier sous-prisme en forme de coin (10a, 10a'), au travers duquel le faisceau de mesure (9a) sortant du dispositif d'émission ( 8a) va être dirigé sur la première surface supérieure (16) du premier sous-prisme en forme de coin (10a, 10a').

8. Lunette de visée selon la revendication 7, **caractérisée en ce que** le premier plan de délimitation (15), dans une zone voisine (15a) de l'élément optique supplémentaire (18) présente une réflectivité supérieure ou égale à 50 %, de préférence d'environ 70 %, et un facteur de transmission inférieur ou égal à 50 %, de préférence d'environ 30 %, pour la gamme de longueurs d'onde du faisceau de mesure (9a, 9b).

9. Lunette de visée selon l'une des revendications 2 à 8, **caractérisée en ce qu'**un faisceau de mesure (9b) réfléchi, reçu et incident sur le premier sous-prisme en forme de coin (10a, 10a', 10a", 10a"') le long du trajet optique de faisceau d'observation (6) va être dévié hors du trajet optique de faisceau d'observation (6) au niveau du premier plan de délimitation (15), traverse le premier sous-prisme en forme de coin (10a, 10a', 10a", 10a"') par plusieurs réflexions sur ses surfaces intérieures (17), sort au niveau d'une seconde surface (19) du premier sous-prisme en forme de coin (10a, 10a', 10a", 10a"'), et est dirigé sur le dispositif de réception (8b).

10. Lunette de visée selon l'une des revendications 1 à 9, **caractérisée en ce que** la lunette de visée (1) comprend en outre un dispositif d'affichage (20) pour afficher une image dans le trajet optique de faisceau d'observation (6).

11. Lunette de visée selon la revendication 10, **caractérisée en ce que** l'image du dispositif d'affichage (20) peut être couplée optiquement par l'intermédiaire de l'élément séparateur de faisceau (10, 10', 10", 10"', 100) dans la partie (6b) s'étendant vers l'oculaire (5) du trajet optique de faisceau d'observation (6).

12. Lunette de visée selon la revendication 10 ou 11, **caractérisée en ce que** le dispositif d'affichage (20) est fixé, et solidaire en déplacement, au dispositif d'émission (8a) du télémètre (8), au dispositif de réception (8b) du télémètre (8), à l'élément séparateur de faisceau (10,10', 10", 10"', 100) et au tube intérieur (11) de la lunette de visée (1), de telle sorte que le dispositif d'affichage (20), par l'intermédiaire des moyens (13) de la lunette de visée (1), peut être déplacé pour régler la direction de la ligne de visée.

13. Lunette de visée selon la revendication 10, 11 ou 12, **caractérisée en ce qu'**une lumière d'affichage (21) sortant du dispositif d'affichage (20) rencontre une surface supérieure (22) du deuxième sous-prisme en forme de coin (10b, 10b', 10b", 10b"'), traverse le deuxième sous-prisme en forme de coin (10b, 10b', 10b", 10b"'), en particulier par de multiples réflexions sur ses surfaces intérieures (23), et va être dévié au niveau du premier plan de délimitation (15) dans la partie (6b) s'étendant vers l'oculaire (5) du trajet optique de faisceau d'observation (6).

14. Lunette de visée selon l'une quelconque des revendications 1 à 13, **caractérisée en ce que** le premier plan de délimitation (15), au moins dans une zone partielle, a un degré de transmission supérieur ou égal à 95 % pour la lumière d'observation visuelle, et un degré de réflexion supérieur ou égal à 99 % pour la gamme de longueurs d'onde du faisceau de mesure (9a, 9b).

15. Lunette de visée selon l'une quelconque des revendications 1 à 14, **caractérisée en ce que** le premier plan de délimitation (15), au moins dans une zone partielle, a un degré de réflexion supérieur ou égale à 30 % pour la longueur d'onde de la lumière d'affichage (21), de sorte que dans la gamme de longueurs d'onde de la lumière d'affichage (21), le degré de transmission est seulement d'environ 65 %.

16. Lunette de visée selon l'une quelconque des revendications 2 à 15, **caractérisée en ce que** le premier sous-prisme en forme de coin (10a, 10a', 10a", 10a"', 100a) et le deuxième sous-prisme en forme de coin (10b, 10b', 10b", 10b"' 100b) de l'élément séparateur de faisceau (10, 10', 10", 10"', 100) sont disposés en pouvant tourner mutuellement l'un par rapport à l'autre, de telle sorte que l'élément séparateur de faisceau (10, 10', 10", 10"', 100), au moins dans une zone partielle dans la direction de passage du trajet optique de faisceau d'observation (6), est conçu sous la forme d'une plaque parallèle plane.

17. Lunette de visée selon l'une quelconque des revendications 1 à 6, **caractérisée en ce qu'**un élément séparateur supplémentaire (31) est fourni, pour séparer le faisceau de mesure (9a, 9b) réfléchi, reçu et incident dans la direction de faisceau entre l'élément séparateur de faisceau (100), d'une part, et le dispositif d'émission (8a) du télémètre (8) et le dispositif de réception (8b) du télémètre (8.

18. Lunette de visée selon la revendication 17, **caractérisée en ce que** l'élément séparateur supplémentaire (31) est également fixé, et solidaire en déplacement, au dispositif d'émission (8a) du télémètre (8), au dispositif de réception (8b) du télémètre (8), à l'élément séparateur de faisceau (100) et au tube intérieur (11) de la lunette de visée (1), de sorte que l'élément séparateur supplémentaire (31) peut être déplacé par les moyens (13) de la lunette de visée **(1)** pour le réglage de la direction de la ligne de visée.

19. Lunette de visée selon la revendication 17 ou 18, **caractérisée en ce que** l'élément séparateur supplémentaire (31) a un degré de réflexion supérieur ou égal à 50 %, de préférence d'environ 70 %, et un degré de transmission inférieur ou égal à 50 %, de préférence d'environ 30 %, pour la gamme de longueurs d'onde du faisceau de mesure (9a, 9b).
